# EUROPÄISCHE PATENTSCHRIFT

(11) **EP 2 308 576 B1**
(45) Veröffentlichungstag und Bekanntmachung des Hinweises auf die Patenterteilung: **04.11.2015**
(21) Anmeldenummer: 09171360.2
(22) Anmeldetag: 25.09.2009
(51) Int. Cl.: B01D 1/12, B01D 3/32, B01D 3/34, B01D 5/00, B01D 9/00

(54) **Verdampfer**
Vaporiser
Evaporateur

(43) Veröffentlichungstag der Anmeldung: 13.04.2011
(73) Patentinhaber: Ebner, Stefan, 61440 Oberursel/Taunus (DE)
(72) Erfinder: Ebner, Stefan, 61440 Oberursel/Taunus (DE)
(74) Vertreter: Köster, Hajo

(56) Entgegenhaltungen:
- DE-A1- 2 108 177
- FR-A- 1 393 567
- FR-A- 1 444 805
- GB-A- 1 090 273
- GB-A- 1 095 622
- US-A- 1 945 281
- US-A- 2 207 347

## Beschreibung

Die Erfindung betrifft einen Verdampfer, der mit einer Umwälzleitung, die unten am Verdampfer beginnt und dann wieder in den Verdampfer zurückgeführt wird, sowie mit Mitteln ausgestattet ist, um die zu verdampfende Flüssigkeit in Kreislauf zu führen, und ein Verfahren zum Eindampfen, Eindampfkristallisieren, Vakuumkühlkristallisieren oder Vakuumkühlen in einem Verdampfer, bei dem die zu verdampfende Flüssigkeit mit Hilfe von Mitteln durch eine unten am Verdampfer beginnende beginnende und wieder in den Verdampfer zurückgeführte Umwälzleitung im Kreislauf geführt wird.

Ein Verdampfer ist in der Verfahrenstechnik eine Vorrichtung zur Überführung einer Flüssigkeit in ihren dampfförmigen Zustand. Bei dieser Flüssigkeit handelte es sich in den meisten Fällen um eine wässrige Flüssigkeit bzw. eine wässrige Lösung.

Es sind die verschiedensten Arten von Verdampfern bekannt, die den unterschiedlichsten Zwecken dienen und mit oder ohne Anwendung von Vakuum betrieben werden können. Zu den hier in Rede stehenden, erfindungsgemäßen Verdampfern zählen somit Vorrichtungen zum Eindampfen, Vorrichtungen zur Eindampfkristallisation, Vorrichtungen zur Vakuumkühlkristallisation und Vorrichtungen zum Vakuumkühlen. Alle diese Vorrichtungen werden hier als Verdampfer bezeichnet.

Eine Vorrichtung zur Eindampfkristallisation ist aus der US-A-1945281 bekannt.

Der erfindungsgemäße Verdampfer weist ebenso wie die bekannten Verdampfer einen Umwälzkreislauf auf. Mit anderen Worten, die zu verdampfende Flüssigkeit wird im Kreislauf geführt. Der Verdampfer ist somit mit den dafür erforderlichen Mitteln und unter anderem mit einer Umwälzleitung ausgestattet.

Bei den Verdampfern zur Eindampfkristallisation und zum Eindampfen ist in den Umwälzkreislauf üblicherweise ein Heizkörper zum Einbringen der notwendigen Verdampfungsenergie eingebaut. Bei Verdampfern zur Vakuumkristallisation und zum Vakuumkühlen fehlt dieser Heizkörper. Die notwendige Verdampfungsenergie wird stattdessen durch den Eintritt von warmer Lösung in den Umwälzkreislauf eingebracht.

Bei tieferen Eindampf- oder Abkühltemperaturen tritt nun das Phänomen auf, dass aufgrund des niedrigen Dampfdrucks der zirkulierenden Flüssigkeit bzw. Lösung keine vollständige Kühlung der Flüssigkeit im Verdampfer entsprechend des im Verdampfer herrschenden Drucks erfolgt. Dies beruht darauf, dass die in den Verdampfer eintretende Flüssigkeit aufgrund der geringen Temperaturerhöhung über die Heizkörper oder die warme eintretende Lösung nur über einen geringfügig höheren Dampfdruck verfügt, als derjenige Dampfdruck, der im Verdampfer vorherrscht.

Diese nur geringe Dampfdruckerhöhung der eintretenden umgewälzten Flüssigkeit verhindert vor allen Dingen bei größeren Umwälzmengen, dass alle Flüssigkeitsteilchen ausdampfen, da sie nicht weit genug an die Oberfläche der Flüssigkeit gelangen können, um aufgrund des geringen Dampfdruckunterschiedes zwischen der eintretenden Flüssigkeit und des Dampfdruckes im Verdampfer den Entspannungsvorgang einzuleiten.

Dies führt dann dazu, dass eine Flüssigkeit mit einer Temperatur, die zwischen derjenigen Temperatur der an der Oberfläche abgekühlten Flüssigkeit und der Temperatur der noch wärmeren Lösung in das Verdampferunterteil (Kurzschlussströmung) gelangt. Dadurch steigt die Temperatur im Verdampfer unterhalb der Oberfläche an und entspricht nicht mehr dem Dampfdruck im Brüdenraum. Dadurch kann die Flüssigkeit nicht mehr bei der dem Brüdendampfdruck im Verdampfer bzw. Verdampfungsraum entsprechenden Temperatur ausgedampft und abgekühlt werden. In Verdampfern zur Eindampfkristallisation wird in diesem Fall für den Heizkörper das treibende Temperaturgefälle an den Heizflächen erniedrigt. Demzufolge sind größere Heizflächen erforderlich. Bei Verdampfern zur Vakuumkristallisation kann nicht mehr soweit abgekühlt werden, wie dies gewünscht ist.

Aufgabe der vorliegenden Erfindung ist es, den geschilderten Verdampfer und Verdampfungsvorgang derart zu verbessern, dass die störende Kurzschlussströmung verhindert oder zumindest verringert werden kann.

Gelöst wird diese Aufgabe durch einen Verdampfer und ein Verfahren gemäß der Lehre der Ansprüche.

Bei dem erfindungsgemäßen Verdampfer ist somit eine Zuführung eines Gases und insbesondere eine Luftzuführung vorgesehen, die in der Umwälzleitung mündet. Der nachstehend verwendete Ausdruck Luft bzw. Luftzuführung steht stellvertretend auch für jedes andere einsetzbare Gas.

Wird Luft an geeigneter Stelle in die Umwälzleitung zugeführt, dann wird dadurch das spezifische Gewicht der in der Umwälzleitung aufsteigenden Flüssigkeit erniedrigt. Die Flüssigkeit wird dann durch Entspannen der Luft beim Weiterleiten in der Umwälzleitung oder beim Eintritt in den Verdampfer zerrissen, sodass alle Teilchen weit genug an die Oberfläche gelangen können, um auf eine Temperatur entsprechend oder nahe der Siedetemperatur der Lösung bei dem im Verdampfer herrschenden Brüdendruck zu entspannen.

Wird die Luft unterhalb der Flüssigkeitsoberfläche im Verdampfer über entsprechende Verteileinbauten in die zu verdampfende Flüssigkeit eingeleitet, dann führt dies zu einer Verwirbelung der Flüssigkeit an der Oberfläche. Auch in diesem Falle können alle Teilchen an die Oberfläche gelangen, um dort ausdampfen zu können.

Erfindungsgemäß ist übrigens auch die Kombination der geschilderten Maßnahmen möglich, bei der die Luft sowohl in die Umwälzleitung als auch unterhalb des Flüssigkeitsspiegels in die zu verdampfende Flüssigkeit eingeleitet wird.

Bei einer Variante des erfindungsgemäßen Verdampfers tritt die Umwälzleitung unterhalb des Flüssigkeitsspiegels in den Verdampfer ein und erstreckt sich im Endbereich zentral nach oben. Bei dieser Variante mündet die Luftzuführung auf Höhe oder unterhalb des oberen freien Randes des Endbereiches der Umwälzleitung.

Wird bei einem Verfahren der hier in Rede stehenden Art Vakuum angelegt bzw. Vakuum angewendet, dann wird üblicherweise die in den Verdampfer befindliche Luft auf Atmosphärenspannung verdichtet, um aus dem System abgeführt werden zu können. Dies gilt bei dem erfindungsgemäßen Verfahren und dem entsprechenden erfindungsgemäßen Verdampfer auch für die zusätzlich zugeführte Luft.

Um eine derartige Verdichtung zu erzielen, sind verhältnismäßig hohe Verdichtungsenergien erforderlich.

Für diese Variante wird bei dem erfindungsgemäßen Verfahren die zugeführte Luft einschließlich der in den Verdampfer bzw. in die Anlage eintretende Leckluft vorzugsweise thermisch oder mechanisch nur soweit verdichtet, dass diese verdichtete Luft wieder in die im Kreislauf geführte Flüssigkeit eingeleitet werden kann, um die geschilderten gewünschten Effekte zu erreichen. Dies erfolgt zweckmäßigerweise nach der Kondensation des Brüdens in einem Heizkörper, Oberflächenkondensator oder Mischkondensator zusammen mit dem anhängenden Wasserdampfanteil.

Hierdurch ergibt sich ein wesentlich niedrigerer Energieverbrauch als bei der Verdichtung auf Atmosphärenspannung, da die Druckdifferenz zwischen Druck im Verdampferraum und notwendigem Druck der zugeführten Luft normalerweise geringer ist, als die Druckdifferenz zwischen Verdampferraum und Atmosphäre.

Bei Verdampfern in Form einer Kristallisationsanlage werden die Stellen, an denen die Luft in die Flüssigkeit eintritt, normalerweise versalzen. Nach einer bevorzugten Ausführungsform des erfindungsgemäßen Verfahrens wird in diesem Falle die Luft vor Eintritt in die Flüssigkeit mit Wasser gesättigt. Dies kann durch entsprechende Einrichtungen wie Luftsättiger, Dampfeinblasung oder ähnliches erreicht werden. Zudem wird zusätzlich oder alternativ auf eine Temperatur aufgeheizt, die gleich oder höher ist, als die im Verdampfer herrschende Temperatur. Dadurch lassen sich wesentlich längere Spülintervalle für die Luftzuführung erreichen.

Ist bei dem erfindungsgemäßen Verfahren vorgesehen, die Luft wie oben beschrieben im Kreislauf zu führen, dann ergibt sich dieser Effekt dann automatisch, wenn diese Kreislaufführung durch beispielsweise Dampfstrahlapparate bewerkstelligt wird.

Die Erfindung wird im Folgenden anhand der beiliegenden Figuren näher erläutert. Dabei zeigen
- Figur 1: drei Varianten eines erfindungsgemäßen Verdampfers in schematischer Funktionsdarstellung,
- Figur 2: einen erfindungsgemäßen Verdampfer mit einem damit verbundenen Verdichter für die aus dem Verdampfer abgezogene Luft in schematischer Funktionsdarstellung und
- Figur 3: einen Luftsättiger in schematischer Funktionsdarstellung.

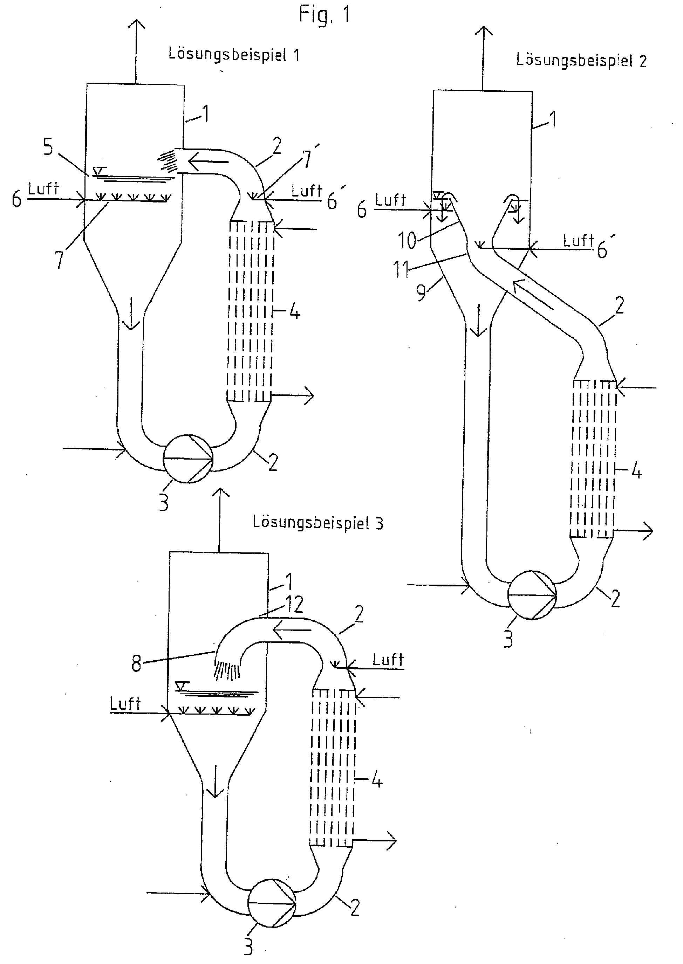

In der Figur 1 sind drei verschiedene Varianten eines erfindungsgemäßen Verdampfers gezeigt und mit Lösungsbeispiel 1, 2 und 3 bezeichnet.

Alle drei in der Figur 1 gezeigten Verdampfer 1 sind mit einer Umwälzleitung 2 und mit einer Umwälzpumpe 3 ausgestattet. Die Umwälzleitung 2 beginnt unten am Verdampfer 1, wird über einen Heizkörper 4 geführt und dann in den Verdampfer 1 zurückgeführt. Der Flüssigkeitsstrom ist mit Pfeilen in der Figur 1 angedeutet.

Der Heizkörper 4 dient zum Einbringen der notwendigen Verdampfungsenergie. Bei Vakuumkristallisationsanlagen und Vakuumkühlanlagen entfällt dieser Heizkörper 4. Die notwendige Verdampfungsenergie wird durch den Eintritt von warmer Lösung in den Umwälzkreislauf eingebracht.

Derartige Verdampfer und die zu diesem Betrieb erforderlichen Mittel sind per se bekannt, so dass sich weitere Ausführungen dazu erübrigen.

Bei dem im Lösungsbeispiel 1 gezeigten Verdampfer 1 mündet die Umwälzleitung 2 tangential oder zentral im Verdampfer 1 (genauer im Verdampferraum), wobei der Flüssigkeitsspiegel 5 unter dem Eintritt der Umwälzleitung 2 in den Verdampfer 1 bis über diesen Eintritt je nach Bedarf schwanken kann.

In den Verdampfer 1 mündet unterhalb des Flüssigkeitsstandes 5 eine Luftzuführung 6. Mit anderen Worten, Luft wird unterhalb des Flüssigkeitsspiegels in die im Verdampfer 1 befindliche zu verdampfende Flüssigkeit eingeleitet bzw. zugeführt.

Innerhalb des Verdampfers 1 befindet sich eine Verteileinrichtung 7, die dafür Sorge trägt, dass die zugeführte Luft an mehreren Stellen und möglichst verteilt in die Flüssigkeit eintreten kann.

Eine zweite Luftzuführung 6' mündet nach dem Heizkörper 4 in die Umwälzleitung 2. Auch dort ist im Inneren der Umwälzleitung 2 eine Verteileinrichtung 7' zum Abgeben der Luft in die im Kreislauf geführte Flüssigkeit vorgesehen.

Bei dem im Lösungsbeispiel 1 gezeigten Verdampfer 1 sind somit zwei Luftzuführungen 6, 6' vorgesehen. Es ist jedoch auch möglich, einen derartigen Verdampfer 1 nur mit einer Luftzuführung auszustatten, nämlich der Luftzuführung 6'.

Durch die Zuführung durch Luft in die Umwälzleitung 2 wird das spezifische Gewicht der in der Umwälzleitung 2 aufsteigenden Lösung erniedrigt. Durch entspannen der Luft beim Aufsteigen in der Umwälzleitung 2 oder bei Eintritt in den Verdampfer 1 wird die Flüssigkeit zerrissen, so dass alle Teilchen weit genug an die Oberfläche der zu verdampfenden Flüssigkeit gelangen können, um auf eine Temperatur entsprechend der Siedetemperatur der Flüssigkeit/Lösung bei dem im Verdampfer 1 herrschenden Brüdendruck zu entspannen.

Bezüglich der zusätzlich durch die Luftzuführung 6 eingeführten Luft gilt, dass durch diese unterhalb der Flüssigkeitsoberfläche im Verdampfer 1 über eine entsprechende Verteileinrichtung 7 für eine Verwirbelung der Flüssigkeit an der Oberfläche Sorge getragen wird, so dass auch in diesem Falle alle Teilchen an die Oberfläche gelangen können, um ausdampfen zu können.

Der im Lösungsbeispiel 3 gezeigte Verdampfer 1 unterscheidet sich vom Verdampfer 1 des Lösungsbeispiels 1 dadurch, dass die Umwälzleitung 2 sich innerhalb des Verdampfers 1 mittels eines in den Verdampfer 1 eingesteckten Rohres 12 fortsetzt, das mit einem Krümmer 8 zur gezielten Steuerung der Richtung des austretenden Gemisches aus der Flüssigkeit und der eventuell zugeführten Luft versehen ist.

Auch bei dem Lösungsbeispiel 3 wird somit Luft in die Umwälzleitung 2 zugeführt und unterhalb des Flüssigkeitsspiegels 5 im Verdampfer 1 eingeleitet, um den gewünschten Effekt des Abkühlens der Flüssigkeit auf eine Temperatur entsprechend der Dampfdrucktemperatur im Verdampfer (genauer Verdampferraum) zu ermöglichen.

Bei dem im Lösungsbeispiel 2 beschriebenen Verdampfer 1 wird die Umwälzleitung 2 im unteren, trichterförmig ausgestalteten Bereich 9 seitlich eingeführt und erstreckt sich dann weiter bis in etwa zum Zentrum und von dort im Endbereich zentral nach oben. In diesem Endbereich kann die sich im Inneren des Verdampfers 1 befindliche Rohrleitung mit einem sich nach oben erweiterten Trichter 10 ausgestattet sein.

Auch in diesem Fall kann Luft in die Umwälzleitung 2 eingeführt werden und denselben Effekt wie bei den oben beschriebenen Lösungsbeispielen bewirken. Diese Luft wird bei dieser Ausführungsform zweckmäßigerweise in den im Inneren des Verdampfers 1 befindlichen Rohrabschnitt 11 eingeführt.

Auch in diesem Falle kann zusätzlich Luft über die Luftzuführung 6 in den Verdampfer 1 in den Bereich des Trichters 10 zugeführt werden. Falls der Flüssigkeitsspiegel 5 oberhalb des Trichters 10 liegt, kann diese Luft am Trichter 11 beispielsweise durch eine Ringleitung zugeführt werden, welche die Flüssigkeit an dieser Stelle durchwirbelt und dafür sorgt, dass alle Flüssigkeitsteilchen an die Oberfläche gelangen und so der bereits oben beschriebene Effekt bewirkt wird.

Alle oben beschriebenen Verdampfer 1 verfügen über eine Luftabzugsleitung 13, durch die die im Verdampfer 1 befindliche Luft einschließlich der zusätzlich zugeführten Luft abgezogen werden kann.

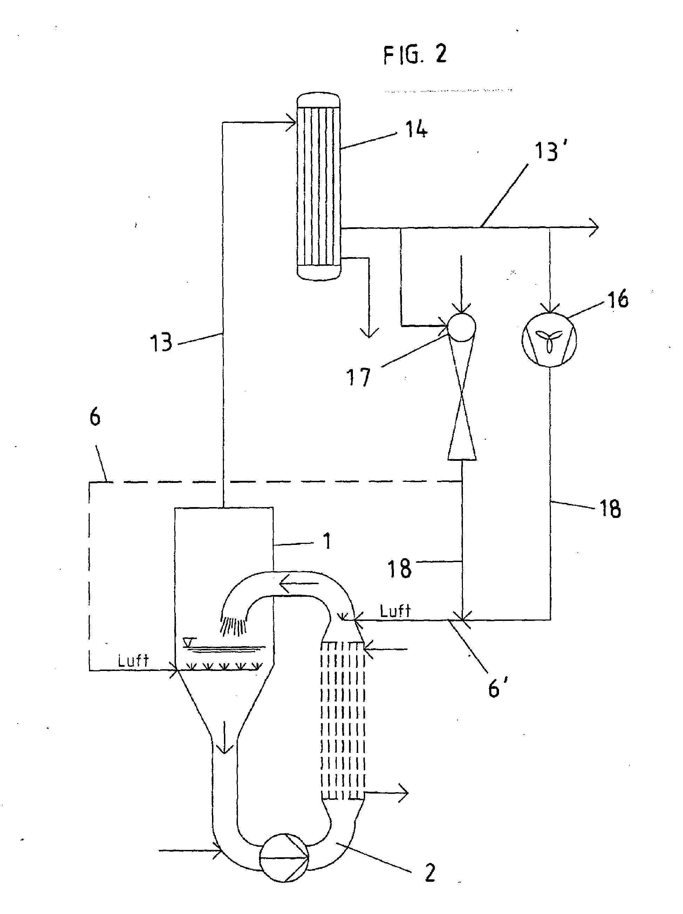

Bei dem in der Fig. 2 schematisch gezeigten Verdampfer 1, der dem Verdampfer 1 gemäß dem Lösungsbeispiel 3 entspricht, jedoch auch durch einen Verdampfer 1 gemäß den Lösungsbeispielen 1 oder 2 ersetzt sein kann, wird Vakuum angewendet.

Bei diesem Verdampfer 1 führt die Luftabzugleitung 13 zu einem Kondensator 14. Zusätzlich ist eine Vakuumpumpe 15 zum Abziehen der Luft vorgesehen.

In dem Kondensator 14 wird der Brüden zusammen mit dem anhängenden Wasseranteil kondensiert. Die Luft wird anschließend über die Luftabzugsleitung 13' zu einem Verdichter in Form eines Dampfstrahlapparates 17 und/oder zu einem mechanischen Verdichter 16 geführt und dort soweit verdichtet, dass sie wieder über die Luftleitung 18 als Hilfsluft durch die Zuführungsleitung 6' zum Verdampfer 1 geführt werden kann. Mit anderen Worten, die abgezogene Luft wird nur auf einen solchen Druck komprimiert, der in etwa dem in der Zuführungsleitung 6, 6' herrschenden Druck entspricht, jedoch niedriger ist als der Atmosphärendruck. Die komprimierte Luft wird somit vor dem Eintritt in die im Kreislauf geführte Lösung bzw. Flüssigkeit mit der in der Zuführungsleitung vorhandenen Luft vereinigt und zusammen damit in die Flüssigkeit eingeleitet.

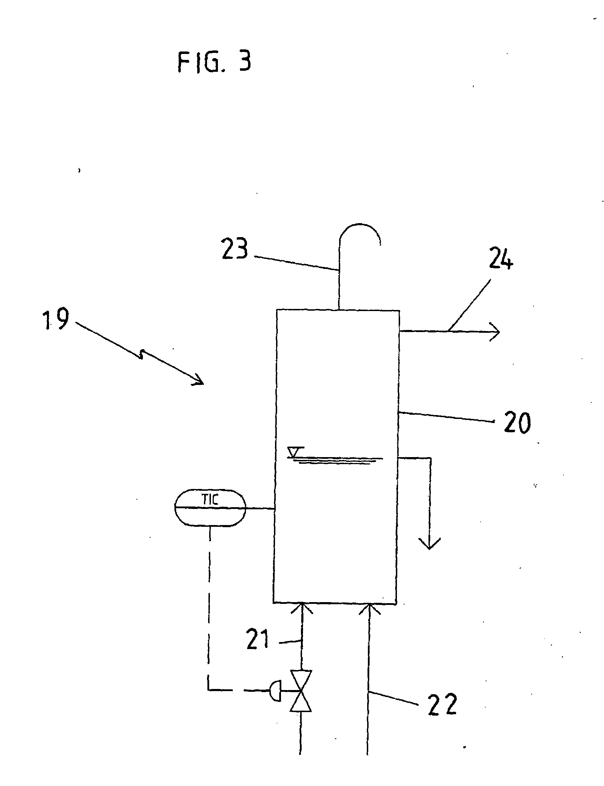

Der in der Figur 3 schematisch gezeigte Luftsättiger 19 besitzt einen Wasser enthaltenden, mit einem Überlauf 25 ausgestatteten Behälter 20, in dessen Boden Dampf durch eine Dampfleitung 21 und Wasser durch eine Wasserleitung 22 zugeführt werden. Durch eine oben im Behälter 20 mündende Luftleitung 23 wird Luft ins Innere des Behälters 20 geführt. Gesättigte Luft wird durch die Leitung 24 abgeführt und zum Verdampfer 1 geleitet.

Wenn im Rahmen der vorliegenden Unterlagen der Einsatz von "Luft" beschrieben wird, dann steht dieser Begriff "Luft" stellvertretend für jedes einsetzbare Gas.

Bezugszeichenliste
- 1: Verdampfer
- 2: Umwälzleitung
- 3: Umwälzpumpe
- 4: Heizkörper
- 5: Flüssigkeitsspiegel
- 6, 6': Luftzuführung
- 7, 7': Verteileinrichtung
- 8: Krümmer
- 9: trichterförmiger Bereich
- 10: Trichter
- 11: Rohrabschnitt
- 12: Rohr
- 13, 13': Luftabzugsleitung
- 14: Kondensator
- 15: Vakuumpumpe
- 16: Verdichter, mechanisch
- 17: Verdichter, Dampfstrahlapparat
- 18, 18': Luftleitung
- 19: Luftsättiger
- 20: Behälter
- 21: Dampfleitung
- 22: Wasserleitung
- 23: Luftleitung
- 24: Leitung
- 25: Überlauf

## Patentansprüche

1. Verdampfer (1), der mit einer Umwälzleitung (2), die unten am Verdampfer (1) beginnt und dann wieder in den Verdampfer (1) zurückgeführt wird, sowie mit Mitteln ausgestattet ist, um die zu verdampfende Flüssigkeit im Kreislauf zu führen,
**dadurch gekennzeichnet, dass**
eine Luftzuführung (6') vorgesehen ist, die in die Umwälzleitung (2) einmündet.

2. Verdampfer nach Anspruch 1,
**dadurch gekennzeichnet, dass**
eine Luftzuführung (6) vorgesehen ist, die unterhalb des Flüssigkeitsspiegels (5) im Verdampfer (1) in die zu verdampfende Flüssigkeit mündet.

3. Verdampfer nach Anspruch 1 oder 2,
**dadurch gekennzeichnet, dass**
die Umwälzleitung (2) unterhalb des Flüssigkeitsspiegels (5) in den Verdampfer (1) eintritt und sich im Endbereich zentral nach oben erstreckt und dass die Luftzuführung (6, 6') auf Höhe des oder unterhalb des oberen freien Randes des Endbereiches der Umwälzleitung (2) endet.

4. Verdampfer nach einem der vorhergehenden Ansprüche,
**dadurch gekennzeichnet, dass**
der Verdampfer (1) mit einem Kondensator (14), mindestens einem Verdichter (16 und/oder 17) und einer Luftabzugsleitung (13) ausgestattet ist, die vom Verdampfer (1) zum Kondensator (14) und von dort zum Verdichter (16 oder 17) führt, und dass vom Verdichter (16 oder 17) eine Luftleitung (19) zur Luftzuführung (6,6') führt.

5. Verdampfer nach einem der vorherigen Ansprüche,
**dadurch gekennzeichnet, dass**
der Verdampfer (1) mit einem Luftsättiger (19) ausgestattet ist.

6. Verfahren zum Eindampfen, Eindampfkristallisieren, Vakuumkühlkristallisieren oder Vakuumkühlen in einem Verdampfer nach Anspruch 1 bei dem die zu verdampfende Flüssigkeit mit Hilfe von Mitteln durch die unten am Verdampfer beginnende und wieder in den Verdampfer zurückgeführte Umwälzleitung im Kreislauf geführt wird,
**dadurch gekennzeichnet, dass**
Luft in die in der Umwälzleitung im Kreislauf geführte Flüssigkeit eingeleitet wird.

7. Verfahren nach Anspruch 6,
**dadurch gekennzeichnet, dass**
Luft unterhalb des Flüssigkeitsspiegels im Verdampfer in die Flüssigkeit eingeleitet wird.

8. Verfahren nach Anspruch 6 oder 7, bei dem Vakuum angelegt und ein Brüden erzeugt wird, der zusammen mit der Luft aus dem Verdampfer abgezogen wird,
**dadurch gekennzeichnet, dass**
die Luft nach der Kondensation des Brüdens thermisch oder mechanisch nur so weit verdichtet wird, dass diese Luft wieder in die im Kreislauf geführte Flüssigkeit eingeleitet werden kann.

9. Verfahren nach Anspruch 7 oder 8,
**dadurch gekennzeichnet, dass**
die verdichtete Luft mit der zugeführten Luft vereinigt wird und zusammen damit unterhalb des Flüssigkeitsspiegels im Verdampfer in die Flüssigkeit und/oder in die in der Umwälzleitung im Kreislauf geführte Flüssigkeit eingeleitet wird.

10. Verfahren nach einem der Ansprüche 6 bis 9, bei dem eine Kristallisation durchgeführt wird,
**dadurch gekennzeichnet, dass**
die zugeführte Luft vor Eintritt in die Flüssigkeit mit Wasser gesättigt und/oder auf eine Temperatur, die gleich oder höher ist als die im Verdampfer herrschende Temperatur, erhitzt wird.

## Claims

1. Vaporiser (1) which is equipped with a circulation line (2), which begins below on the vaporiser (1) and is then fed back into the vaporiser (1), and also with means to guide the liquid to be vaporised in the circuit,
**characterised in that**
an air feed (6') is provided which opens into the circulation line (2).

2. Vaporiser according to claim 1,
**characterised in that**
an air feed (6) is provided which opens below the liquid level (5) in the vaporiser (1) into the liquid to be vaporised.

3. Vaporiser according to claim 1 or 2,
**characterised in that**
the circulation line (2) enters the vaporiser (1) below the liquid level (5) and extends in the end region centrally upwards, and the air feed (6,6') ends at the level of or below the upper free edge of the end region of the circulation line (2).

4. Vaporiser according to one of the preceding claims,
**characterised in that**
the vaporiser (1) is equipped with a condenser (14), at least one compressor (16 and/or 17) and an air discharge line (13) which leads from the vaporiser (1) to the condenser (14) and from there to the compressor (16 or 17), and an air line (19) leads from the compressor (16 or 17) to the air feed (6,6').

5. Vaporiser according to one of the preceding claims,
**characterised in that**
the vaporiser (1) is equipped with an air saturator (19).

6. Method for vaporisation, vaporisation-crystallisation, vacuum cooling crystallisation or vacuum cooling in a vaporiser according to claim 1, wherein the liquid to be vaporised is guided with the aid of means through the circulation line beginning at the vaporiser at the bottom and fed back into the vaporiser,
**characterised in that**
air is introduced into the liquid guided in the circulation line in the circuit.

7. Method according to claim 6,
**characterised in that**
air is introduced into the liquid below the liquid level in the vaporiser.

8. Method according to claim 6 or 7, wherein vacuum is supplied and an exhaust vapour is produced which is discharged together with the air from the vaporiser,
**characterised in that**
the air, after condensation of the exhaust vapour, is thermally or mechanically compressed only so much that this air can be introduced into the liquid guided in the circuit again.

9. Method according to claim 7 or 8,
**characterised in that**
the compressed air is combined with the supplied air and introduced together with it below the liquid level in the vaporiser into the liquid and/or into the liquid guided in the circulation line in the circuit.

10. Method according to one of claims 6 to 9, wherein crystallisation is carried out,
**characterised in that**
the supplied air is saturated with water before entry into the liquid and/or heated to a temperature which is equal to or greater than the temperature prevailing in the vaporiser.

## Revendications

1. Evaporateur (1), qui est équipé d'une conduite de circulation (2) qui commence en bas à l'évaporateur (1) et qui est ensuite ramenée de nouveau dans l'évaporateur (1), ainsi que de moyens destinés à conduire le liquide à évaporer dans le circuit,
**caractérisé en ce**
**qu'**il est prévu une amenée d'air (6') qui débouche dans la conduite de circulation (2).

2. Evaporateur selon la revendication 1,
**caractérisé en ce**
**qu'**il est prévu une amenée d'air (6) qui débouche, au-dessous du niveau de liquide (5) dans l'évaporateur (1), dans le liquide à évaporer.

3. Evaporateur selon la revendication 1 ou 2,
**caractérisé en ce que**
la conduite de circulation (2) entre, au-dessous du niveau de liquide (5), dans l'évaporateur (1) et s'étend vers le haut dans la zone d'extrémité de façon centrale et **en ce que** l'amenée d'air (6, 6') se termine à la hauteur ou au-dessous du bord libre supérieur de la zone d'extrémité de la conduite de circulation (2).

4. Evaporateur selon l'une des revendications précédentes,
**caractérisé en ce que**
l'évaporateur (1) est équipé d'un condenseur (14), au moins d'un compresseur (16 et/ou 17) et d'une conduite d'extraction d'air (13) qui conduit de l'évaporateur (1) au condenseur (14) et, de là, au compresseur (16 ou 17), et **en ce qu'**une conduite d'air (19) conduit du compresseur (16 ou 17) à l'amenée d'air (6, 6').

5. Evaporateur selon l'une des revendications précédentes,
**caractérisé en ce que**
l'évaporateur (1) est équipé d'un saturateur d'air (19).

6. Procédé d'évaporation, de cristallisation par évaporation, de cristallisation par refroidissement sous vide ou de refroidissement sous vide dans un évaporateur selon la revendication 1, dans lequel le liquide à évaporer est conduit dans le circuit à l'aide de moyens à travers la conduite de circulation commençant en bas sur l'évaporateur et ramenée de nouveau dans l'évaporateur,
**caractérisé en ce que**
de l'air est introduit dans le liquide conduit dans le circuit dans la conduite de circulation.

7. Procédé selon la revendication 6,
**caractérisé en ce que**
de l'air est introduit dans le liquide au-dessous du niveau de liquide dans l'évaporateur.

8. Procédé selon la revendication 6 ou 7, dans lequel du vide est appliqué et de la buée est produite qui est extraite de l'évaporateur en même temps que l'air,
**caractérisé en ce que**,
après la condensation de la buée, l'air est comprimé thermiquement ou mécaniquement juste ce qu'il faut pour que cet air puisse être réintroduit dans le liquide conduit dans le circuit.

9. Procédé selon la revendication 7 ou 8,
**caractérisé en ce que**
l'air comprimé est réuni à l'air amené et est introduit, de façon conjointe avec celui-ci, au-dessous du niveau de liquide dans l'évaporateur, dans le liquide et/ou dans le liquide conduit dans la conduite de circulation dans le circuit.

10. Procédé selon l'une des revendications 6 à 9, dans lequel une cristallisation est effectuée,
**caractérisé en ce que**,
avant l'entrée dans le liquide, l'air amené est saturé en eau et/ou est chauffé à une température qui est égale ou supérieure à la température régnant dans l'évaporateur.
